# EUROPÄISCHE PATENTSCHRIFT

(11) **EP 1 427 536 B1**
(45) Veröffentlichungstag und Bekanntmachung des Hinweises auf die Patenterteilung: **17.08.2005**
(21) Anmeldenummer: 02767486.0
(22) Anmeldetag: 14.09.2002
(51) Int. Cl.: B05B 7/14, B65G 53/28, F04B 53/14, F04F 1/06

(54) **VORRICHTUNG ZUM FÖRDERN VON PULVER UND VERFAHREN ZU DEREN BETRIEB**
DEVICE FOR CONVEYING POWDER AND METHOD FOR OPERATING THE SAME
DISPOSITIF POUR TRANSPORTER DE LA POUDRE ET PROCEDE POUR LE FAIRE FONCTIONNER

(30) Priorität: 14.09.2001 DE 10145448
(43) Veröffentlichungstag der Anmeldung: 16.06.2004
(73) Patentinhaber: Ramseier Technologies AG, 3113 Rubingen (CH)
(72) Erfinder: MOSER, Jürg, CH-3421 Lyssach (CH)
(74) Vertreter: Kreutzer, Ulrich, Dipl.-Phys.
(86) Internationale Anmeldenummer: PCT/EP2002/010339
(87) Internationale Veröffentlichungsnummer: WO 2003/024612

(56) Entgegenhaltungen:
- DE-B- 1 087 520
- US-A- 2 151 514
- US-A- 2 667 280

## Beschreibung

Die Erfindung betrifft eine Förderanlage zum Fördern von Pulver, deren Verwendung sowie ein Verfahren zum Fördern von Pulver.

Zahlreiche bekannte Vorrichtungen zum Fördern von Pulver arbeiten nach dem Venturi-Prinzip, bei dem das Pulver durch einen Gasstrom in einer Düse mitgerissen wird. Solche Vorrichtungen sind zwar einfach im Aufbau, haben aber drei gravierende Nachteile:
Zum einen ist die im Gasstrom zu erreichende Pulverdichte sehr gering und das Pulver wird mittels Flugförderung transportiert d.h. die Luftgeschwindigkeit muss größer sein als die Schwebegeschwindigkeit. Zum anderen ist die Konstanz der geförderten Pulvermenge völlig unzureichend. Darüber hinaus lässt sich die Pulvermenge nur schlecht dosieren. Diese Nachteile sind besonders gravierend, wenn solche auf dem Venturi-Prinzip basierende Pumpen zur Förderung von Pulverlacken eingesetzt werden, da die resultierenden Beschichtungen erhebliche Schwankungen in der Schichtdicke und den optischen Eigenschaften aufweisen.

Deshalb wurde in der Vergangenheit nach Lösungen gesucht, die nicht nach dem Venturi-Prinzip arbeiten.

Aus der EP 1 106 547 A1 ist eine Vorrichtung, gemäß des oberbegriffs der Ansprüche 1 bzw. 15, bekannt, bei der Pulver pneumatisch in eine so genannte Dosierkammer gefördert wird. Diese Dosierkammer ist mit einer Saugleitung verbunden. Die Dosierkammer ist des weiteren mit einer Druckleitung verbunden, wodurch das Pulver aus der Dosierkammer in eine Austragsleitung gefördert wird.
Um in der Saugleitung einen Unterdruck zu erzeugen, benötigt diese Vorrichtung eine externe Vorrichtung außerhalb der Dosierkammer zum Erzeugen von Unterdruck, beispielsweise eine Vakuumpumpe. Zwischen dieser und der Dosierkammer muss ein Steuerorgan vorhanden sein, mit dem sich der Durchgang für das Gas unterbrechen und freigeben lässt. Damit das in die Dosierkammer strömende Pulver nicht in die Saugleitung gelangen kann, ist letztere durch eine gasdurchiässige Trennmembrane von der Dosierkammer getrennt. Je nach der Beschaffenheit des mit dieser Vorrichtung geförderten Pulvers neigt die Trennmembrane dazu, verstopft oder verklebt zu werden, was natürlich das einwandfreie Funktionieren der Vorrichtung beeinträchtigt.

Eine weitere Membranpumpe zur Förderung von Pulvern ist aus der EP 0 124 933 bekannt. Dort ist eine Pumpe mit einem Kolben beschrieben, der in einer Förderkammer auf- und abwärts bewegt wird. Der Kolben erzeugt bei seinem Aufwärtsgang einen Unterdruck in der Zufuhrleitung und saugt so das Pulver aus dem Vorratsbehälter. Anschließend wird durch eine Abwärtsbewegung des Kolben das Pulver in der Förderkammer verdichtet. Nachdem der Kolben den unteren Totpunkt erreicht hat, wird die Austragsleitung geöffnet und das verdichtete Pulver mittels Druckluft zur Applikationsstelle gefördert.
Für die Unterdruckerzeugung muss der Kolben über eine Dichtung abgedichtet werden, was zu einem extremen Verschleiß und Verschmutzungen der bewegten Teile führt.
Diese Pumpe erzeugt einen sehr ungleichmäßigen Pulver/Luft-Volumenstrom. Des weiteren führen leicht vemetzbare Pulver, wie beispielsweise härtbare Pulverlacke, aufgrund der Komprimierung vor der Förderung leicht zu Verstopfungen der Förderkammer.
Dies ist wohl auch der Grund, warum diese Bauart sich bei der Förderung von Pulverlacken nicht durchgesetzt hat.

Gemäß der US 3,391,963 wird soll ein Verstopfen einer Membran bei einer Fördervorrichtung von Pulver dadurch verhindert werden, dass die Membran von einem Kolben hin- und herbewegt wird. Dadurch wellt sich die Membran und das an ihr haftende Pulver kann abgeschüttelt werden. Diese Vorrichtung arbeitet ohne Zufuhr von Druckluft in die Förderkammer.
Diese Vorrichtung ist jedoch teuer und verschleißanfällig, da sie eine semipermeable Membran verlangt. Darüber hinaus wird durch die mechanische Bewegung der Membran der größte Teil des anhaftenden Pulvers entfernt. Jedoch verbleiben geringe Mengen an Pulver auf der Oberfläche der Membran, so dass nach längerer Betriebszeit Verklebungen der Pulver zu beobachten sind.

Weiterhin ist aus der DE 10 87 520 B eine Vorrichtung zum pneumatischen Fördern von schüttfähigem Gut bekannt, die nach dem bekannten Doppelkolbenprinzip arbeitet.
Bei der Vorrichtung werden ebenfalls poröse Einsätze verwendet, die das Fördergut von den Arbeitselementen der Kolbenanlage trennen. Somit wird verhindert, dass das Fördergut mit den Arbeitselementen in Berührung kommt. Gemäß der Lehre dieser Druckschrift können als poröse Einsätze Gewebe, keramisches Steinmaterial oder Sintermetall, verwendet werden.
Der entscheidende Nachteil dieser Vorrichtung liegt darin, dass die Einsätze bei der Förderung feiner Pulver schnell verkleben oder sich zusetzen können. Erhöhte Verschteißanfälligkeit und extrem verkürzte Wartungsintervalle sind die Folge. Dadurch ist auch diese Vorrichtung weniger zur Förderung von härtbaren und von feinen Pulvern, wie zum Beispiel von Pulverlacken, geeignet.

Der vorliegenden Erfindung liegt die Aufgabe zugrunde, eine Förderanlage für die Förderung von Pulvern bereitzustellen, die einfacher und störungsfreier zu betreiben ist und die eine wesentlich verbesserte Konstanz in der Fördermenge aufweist als die bekannten Pumpen des Standes der Technik.

Die Förderanlage der vorliegenden Erfindung soll sich besonders für die Förderung von vernetzbaren und/oder härtbaren Lacken eignen, ohne dass Anbackungen oder Verklebungen innerhalb der Förderanlage auftreten.
Ferner soll die Förderanlage ohne eine zusätzliche, externe Quelle zur Erzeugung eines Unterdrucks zu betreiben sein.

Die Aufgabe wird gelöst durch eine Förderanlage gemäß den Ansprüchen.

Unter der Bezeichnung "Förderkammer" wird hier und im folgenden der Teil der Vorrichtung (1) verstanden, der für das Pulver zugänglich ist, wenn sich der Kolben am oberen Totpunkt (OT) befindet.
Nicht dazu gerechnet werden die Zuführleitung (6) und die Austragsleitung (8).

Der Kolben (11) bewegt sich in der Förderkammer (3). Darunter wird verstanden, dass die Stirnfläche des Kolbens einen Teil der Förderkammer bei der Kolbenbewegung durchfährt. An den oberen Teil der Förderkammer schließt sich der Teil der Zylinderkammer an, die durch die Bauweise des Kolbens notwendig ist, wenn er sich am oberen Totpunkt (OT) befindet. Dieser Teil der Zylinderkammer ist für das zu fördernde Pulver nicht zugänglich.

Diese erfindungemäße Förderanlage gewährleistet einen gleichmäßigen Transport von großen Pulvermengen ohne große Mengen an Transportluft und hohe Volumengeschwindigkeiten, wie sie beispielsweise bei Fördervorrichtungen unvermeidlich sind, die auf dem Venturi-Prinzip basieren.
Dieser gleichmäßige Transport zeigt sich besonders eindrucksvoll an Langzeituntersuchungen hinsichtlich der Fördermenge: Mit dieser erfindungsgemäßen Pumpe ist es erstmals möglich, über einen Betriebszeitraum von 100 Tagen eine maximale Abweichung von ± 2 % der voreingestellten Fördermenge von 250 g/min Pulver zu erreichen.
Des weiteren hat die erfindungsgemäße Lösung insbesondere den Vorteil, dass sie ohne eine außerhalb der Förderkammer angeordnete Einrichtung zum Erzeugen von Unterdruck auskommt. Somit entfallen externe Vorrichtungen zur Erzeugung eines Unterdrucks, das über die Zuführleitung zu fördernde Pulver wird ausschließlich durch die Kolbenbewegung gefördert, genauer gesagt durch die Kolbenbewegung von unteren Totpunkt (UT) zum oberen Totpunkt (OT). Die Mittel zur Erzeugung eines Unterdrucks sind nur in der Vorrichtung (1) integriert, nämlich in der Förderkammer (3).
Die erfindungsgemäße Förderanlage weist gegenüber bekannten Pumpen keine Membran auf. Daher sind auch bei der Förderung fein verteilter Pulver, die vemetzungsfähig oder physikalisch härtbar sind (wie z.B. Pulverlacke für die Lackierung von Oberflächen), keine Anbackungen zu beobachten.

Der Zylinderinnenraum kann des weiteren eine am oberen Totpunkt (OT) angeordnete Dichtung aufweisen; der Kolben hat in diesem Fall einen etwa 0,5 mm geringeren Durchmesser als die Bohrung des Zylinderinnenraums. Durch diese Ausführungsform können Pulverablagerungen an den bewegten Teilen und der Verschleiß deutlich verringert werden.

Gemäß einer bevorzugten erfindungsgemäßen Ausführungsform der vorliegenden Anmeldung weist die Förderanlage zusätzlich eine Steuereinheit auf, um eine nicht synchrone Hin- und Herbewegung der einzelnen Kolben (11) zu gewährleisten.
Unter dem Begriff "nicht synchron" wird hier und im folgenden verstanden, dass die Kolben zu einem definierten Zeitpunkt ihres Betriebs sich nicht in die gleiche Richtung bewegen und nicht sich am gleichen Ort befinden.

Der Vorteil dieser Ausführungsform ist, dass die Fördermenge über den zeitlichen Verlauf noch weiter verbessert ist. Dies ist besonders für kritische Anwendungsbereiche, wie z.B. die Zuführung von Pulverlack zu den entsprechenden Zerstäubervorrichtung (ESTA-Hochrotationsglocken) von erheblichem Vorteil, was sich einfach an einem wesentlich besseren Verlauf der resultierenden ausgehärteten Lackfilme zeigt.
Des weiteren ist keine Fluidisierung des Pulvers für den Ansaugvorgang notwendig, die sonst zu beobachtende Entmischung des Pulvers wird somit wirksam verhindert.

Die Austragsleitungen (8) einer jeden Vorrichtung können einzelnen Verbrauchsstellen zugeführt werden.

Entsprechend einer weiteren, ebenfalls bevorzugten Ausführungsform dieser Anmeldung werden die Austragsleitungen (8) an eine gemeinsame Verbrauchsstelle geführt.
Auf diese Weise wird - neben den zuvor beschriebenen Maßnahmen - die Fördermenge über den zeitlichen Verlauf ein weiteres Mal verbessert.

In einer weiteren, ganz besonders bevorzugten Ausgestaltung der vorliegenden Erfindung weist die Förderanlage zwei Vorrichtungen (1) auf.
Diese Ausführungsform stellt nach bisherigen Erkenntnissen ein Optimum an konstanter Fördermenge im Hinblick auf eine möglichst einfache und kostengünstige Ausführungsform der vorliegenden Erfindung dar.

Die vorliegende Erfindung betrifft ebenfalls bevorzugt solche Förderanlagen, deren Vorrichtungen (1) zusätzlich einen Kanal (12) zum Zuführen von Druckgas zur Förderkammer (3) aufweist.
Hierdurch können erstmals sehr kritische Pulver gefördert werden, die bisher in mechanisch betriebenen Pulverpumpen zu Verklebungen oder Anbackungen geführt haben. Solche kritischen Pulver sind beispielsweise Pulverlacke auf Acrylatbasis, die zusätzlich ein Verlaufsmittel enthalten.
Entsprechend dieser Ausführungsform können solche bisher schwierig zu fördernde Pulver einfach transportiert und/oder dosiert werden.

Besonders bevorzugt ist eine erfindungsgemäße Förderanlage, bei der der Kanal (12) oberhalb des unteren Totpunkts (UT) des Kolbens (11) in die Förderkammer (3) mündet.
Auf diese Weise wird eine möglichst schonende Luftverteilung in der Förderkammer erreicht.

Gemäß einer bevorzugten erfindungsgemäßen Ausführungsform der vorliegenden Anmeldung mündet der Kanal (12) in eine umlaufende Nut mit Öffnung zur Förderkammer (3).
Diese Ausführungsform gewährleistet eine besonders gleichmäßige Luftverteilung. Durch die umlaufende Nut kann ein spezieller Reinigungsschritt der Förderkammer möglichst effektiv durchgeführt werden. Hierzu braucht man nur Druckluft mit einem doppelt so hohen Druck als im normalen Förderbetrieb in die Förderkammer üpber die vorhandenen Vorrichtungen zu geben. Im Allgemeinen beträgt der Druck der zugeführten Luft 3 bar. Für den Reinigungsschritt wird der Druck der Druckluft auf 6 bar erhöht. Durch die umlaufende Nut mit Öffnung zur Förderkammer (3) wird auf diese Weise eine effektive Reinigung der Förderkammer (3) gewährleistet.
Damit ist ein schneller Wechsel unterschiedlicher Pulver mit der erfindungsgemäßen Vorrichtung erstmals möglich, ohne dass die erfindungsgemäße Förderanlage manuell gereinigt werden muss. Durch die Umlauf mit Öffnung zur Förderkammer hin wird die Nut selber auch sauber gereinigt. Somit verbleiben in der Nut nach einem Reinigungsschritt keine Pulverreste. Der Wechsel unterschiedlicher Pulver ist besonders in der Lackierung von Oberflächen mittels Pulverlacke äußerst interessant: So können wesentlich schneller Farbtonwechsel durchgeführt werden; die bisher üblichen Farbtonschwankungen durch Verunreinigungen entfallen bei Verwendung der erfindungsgemäßen Förderanlage völlig.

In einer weiteren bevorzugten Ausgestaltung der vorliegenden Erfindung hat die umlaufende Nut eine Weite von 0,05 bis 1 mm.
Diese Nutenbreite stellt ein Optimum dar zwischen ausreichender Breite, über die die für besonders kritische Pulver notwendige Luftmenge dauerhaft der Förderkammer zugeführt werden kann und einer nicht zu großen Weite, die ein Zusetzen der Nut mit dem zu fördernden Pulver begünstigen würde.

Entsprechend einer weiteren, ebenfalls bevorzugten Ausführungsform dieser Anmeldung sind der untere Teil (3a) der Förderkammer (3), die Zuführleitung (6) und die Austragsleitung (8) aus dem gleichen Material gefertigt. Insbesondere stellen sie eine auswechselbare Einheit dar.
Der besondere Vorteil liegt in der Servicefreundlichkeit und Einfachheit dieser Ausführung.

Die vorliegende Erfindung betrifft ebenfalls bevorzugt eine Förderanlage, bei der mindestens eine der Austragsleitungen (8) einen inneren Durchmesser von weniger als 8 mm, insbesondere weniger als 6,5 mm, aufweist.
Diese Ausführungsform ist dann von besonderem Vorteil, wenn der Endverbraucher sehr wenig Gegendruck auf den geförderten Pulverstrom in der Austragsleitung (8) ausübt. Der im Vergleich zu den sonst verwendeten Zuführ- und Austragsleitungen sehr niedrige Innendurchmesser bewirkt einen solchen Gegendruck, dass ein noch gleichmäßigerer Volumenstrom erzielt werden kann als bei größeren Durchmesser. Das insbesondere für die Pulverlackierung mit Nachteilen in der optischen Güte der erhaltenen Lackierungen verbundene Pulsieren des Pulver/Luft-Stroms wird so verhindert.

Bei einer gleichermaßen bevorzugten Förderanlage der vorliegenden Erfindung hat mindestens eine der Austragsleitungen (8) eine Länge von mindestens 5 m, insbesondere von mindestens 10 m.
Diese Mindestlänge baut den zum Verhindern eines Restpulsieren notwendigen Gegendruck auf. Im Gegensatz zu Pumpen des Standes der Technik ist die Förderanlage der vorliegenden Erfindung um so besser, je länger die Austragsleitung ist. Eine optimale Förderung ist auch mit einer Länge von 100 m immer noch gewährleistet.

Gemäß einer weiteren, ebenfalls bevorzugten erfindungsgemäßen Ausführungsform der vorliegenden Anmeldung ist der Kolben (11) über ein Entkoppelungselement (32) mit der Antriebseinheit (31) verbunden.
Auf diese Weise können sehr einfache Antriebseinheiten für den Antrieb des Kolbens verwendet werden, beispielsweise einfache pneumatisch betriebene Druckluftzylinder. Diese handelsüblichen Druckluftzylinder haben aufgrund ihrer Bauweise ein seitliches Spiel. Dieses seitliche Spiel verhindert eine präzise Führung eines starr mit einer solchen Antriebseinheit verbundenen Kolbens (11). Diese Toleranzen würden zu Verklebungen an den Seitenwänden der Förderkammer im Bereich zwischen dem oberen Totpunkt (OT) und unterem Totpunkt (UT) führen. Des weiteren würde dieses seitliche Spiel eine deutlich niedrigere Standzeit vorhandener Dichtungselemente mit sich bringen.
Das zusätzliche Entkopplungselement ist sowohl mit der Antriebseinheit und mit dem Kolben in Hub- und Abwärtsrichtung fest verbunden. Allerdings weist es durch übliche, dem Fachmann bekannte Maßnahmen ein seitliches Spiel auf, die das eigentlich unerwünschte seitliche Spiel somit ausgleichen. Diese Ausführungsform gewährleistet ein hohe Führungssicherheit des Kolbens.

Es ist aber auch möglich, auf das zuvor beschrieben Entkopplungselement (32) vollständig zu verzichten. In dieser ebenfalls bevorzugten Ausführungsform der Erfindung ist der Kolben (11) direkt mit der Antriebseinheit (31) verbunden.
Somit ist es möglich, dass der Kolben (11) vollumfänglich in der Führungsbuchse läuft.

Entsprechend einer weiteren, ebenfalls bevorzugten Ausführungsform dieser Anmeldung weist der innere Durchmesser der Förderkammer im Bereich zwischen dem oberen Totpunkt (OT) und unteren Totpunkt (UT) des Kolbens (11) einen Durchmesser auf, der 0,2 bis 0,8 mm größer ist als der äußere Durchmesser des Kolbens (11).

Bei dieser Ausführungsform wird die Luft laminar in die Förderkammer eingebracht; gleichzeitig werden Verschmutzungen an der Zylinderinnenwand vermieden.

In einer weiteren bevorzugten Ausgestaltung der vorliegenden Erfindung beträgt das Totvolumen bei geschlossenem Ventil und Kolben am unteren Totpunkt weniger als 1/10, insbesondere weniger als 1/50, des Volumens der gesamten Förderkammer beträgt.
Die Verringerung des Totvolumens ist dann besonders wichtig, wenn Schwankungen von weniger als 2 % des geförderten Luft/Pulver-Stroms über lange Zeit gewährleistet werden müssen.
Üblicherweise hat eine Vorrichtung (1) der erfindungsgemäßen Förderanlage ein Volumen der Förderkammer zwischen 15 und 40 ml. Ein Totvolumen von weniger als 1 ml absolut zeigt bereits deutliche Verbesserungen in der Konstanz der Fördermenge.
In der Praxis wird das Totvolumen am einfachsten verringert, in dem die Ventile der Zuführleitung (6) und der Austragsleitung (8) möglichst nah an der Förderkammer (3) angeordnet sind.

Die vorliegende Erfindung betrifft zur Lösung der Aufgabe des weiteren ein Verfahren zum Fördern von Pulver mittels einer Vorrichtung, die eine Förderkammer (3), in die eine Zuführleitung (6) und eine Austragsleitung (8) für das Pulver münden; einen Kolben (11) zum Erzeugen eines Unterdrucks in der Förderkammer (3); und einen Kanal (12) zum Zuführen von Druckgas zur Förderkammer (3) aufweist, wobei der Kolben (11) aus seiner Ausgangslage durch eine Bewegung das Pulver in die Förderkammer saugt, dann Druckgas der Förderkammer (3) zugeführt wird und anschließend der Kolben (11) in seine Ausgangslage zurückkehrt.
Dieses erfindungemäße Verfahren gewährleistet ebenso wie die zuvor beschriebene Förderanlage einen gleichmäßigen Transport von großen Pulvermengen ohne große Mengen an Transportluft und hohe Volumengeschwindigkeiten, wie sie beispielsweise bei Fördervorrichtungen unvermeidlich sind, die auf dem Venturi-Prinzip basieren.
Dieser gleichmäßige Transport zeigt sich besonders eindrucksvoll an Langzeituntersuchungen hinsichtlich der Fördermenge: Mit dem erfindungsgemäßen Verfahren ist es möglich, über einen Betriebszeitraum von 100 Tagen eine maximale Abweichung von ± 2 % der voreingestellten Fördermenge von 250 g/min Pulver zu erreichen.
Des weiteren hat die erfindungsgemäße Lösung insbesondere den Vorteil, dass sie ohne eine außerhalb der Förderkammer angeordnete Einrichtung zum Erzeugen von Unterdruck auskommt. Somit entfallen externe Vorrichtungen zur Erzeugung eines Unterdrucks, das über die Zuführleitung zu fördernde Pulver wird ausschließlich durch die Kolbenbewegung gefördert, genauer gesagt durch die Kolbenbewegung von unteren Totpunkt (UT) zum oberen Totpunkt (OT). Die Mittel zur Erzeugung eines Unterdrucks sind nur in der Vorrichtung (1) integriert, nämlich in der Förderkammer (3). Das erfindungsgemäße Verfahren benötigt keine Membran zur Erzeugung eines Unterdrucks.
Durch die Zufuhr von Druckgas können erstmals sehr kritische Pulver gefördert werden, die bisher in anderen Pulverpumpen des Standes der Technik zu Verklebungen oder Anbackungen geführt haben. Solche kritischen Pulver sind beispielsweise Pulverlacke auf Acrylatbasis, die zusätzlich ein Verlaufsmittel enthalten.

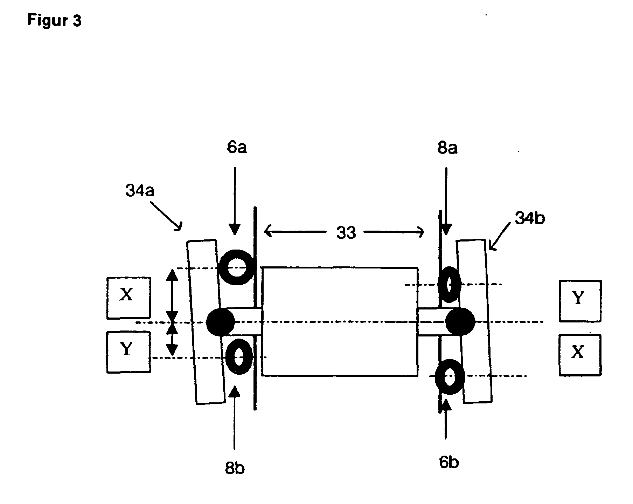

Bei einer gleichermaßen bevorzugten Ausführungsform des erfindungsgemäßen Verfahrens erfolgt das Verschließen der Zuführleitung (6) und das Öffnen der Austragsleitung (8) nicht gleichzeitig. Insbesondere wird zuerst die Zuführleitung verschlossen und dann die Austragsleitung geöffnet.
Gemäß einer einfachen Realisierung dieses Verfahrensmerkmals bestehen die Zuführleitung (6) und die Austragsleitung (8) aus einem elastomeren Material. Zwischen beiden Schläuchen befindet sich eine Wandung, in einem Absperrbereich sind die Schläuche parallel geführt. Durch einen mechanischen Antrieb werden zwei parallel zueinander angeordnete Stäbe in senkrechter Richtung zur Wandung und zur Schlauchrichtung bewegt. Durch diese Bewegung bewegt sich der erste Stab weg von der ersten Schlauchleitung, der zweite Stab bewegt sich auf die zweite Schlauchleitung und quetscht diese. So wird die erste Schlauchleitung geöffnet und die zweite Schlauchleitung geschlossen. Wird der mechanische Antrieb in die entgegengesetzte Richtung bewegt, so wird die erste Schlauchleitung geöffnet und die zweite verschlossen. Um ein zeitlich verzögertes Öffnen und Schließen der beiden Schlauchleitungen sicherzustellen, werden die beiden Stäbe parallel zueinander, aber schräg zu der Wandung ausgerichtet. Für eine größere zeitliche Verzögerung ist es vorteilhaft, wenn die im Absperrverlauf durch beide Schläuche verlaufende senkrechte Schnittebene mit der durch die Bewegung der Stäbe gebildeten Achse einen Winkel von mehr als 30 ° bildet.
Eine solche Schließ- und Öffnungsvorrichtung zum zeitlich unterschiedlichen Öffnen und Verschließen der Zuführleitung (6) und Austragsleitung (8) ist schematisch in Abbildung 3 dargestellt.

Entsprechend einer weiteren, ebenfalls bevorzugten Ausführungsform des erfindungsgemäßen Verfahrens ist die Abwärtsgeschwindigkeit des Kolbens nicht konstant. Insbesondere wird die Abwärtsgeschwindigkeit zum unteren Totpunkt (UT) hin verlangsamt.
Hierdurch wird die gleichmäßige Förderung des Pulvers noch einmal verbessert. Die Steuerung der Abwärtsgeschwindigkeit des Kolbens (11) erfolgt über die Druckluft.

In einer weiteren bevorzugten Ausgestaltung der vorliegenden Erfindung wird die Fördermenge an Pulver durch den Hub des Zylinders eingestellt.
Hierdurch kann in einfacher Weise eine Voreinstellung der zu fördernden Pulvermenge realisiert werden.

Die vorliegende Erfindung betrifft ebenfalls bevorzugt ein Verfahren, bei dem die Fördermenge an Pulver durch die Hubfrequenz des Zylinders eingestellt wird.
Diese Einstellung stellt eine einfache und effektive Möglichkeit zur Feineinstellung der zu fördernden Pulvermenge dar. Diese Einstellung ist durch einen einfache elektronische Regelung der Hubfrequenz möglich.

Eine gleichermaßen bevorzugte Ausgestaltung des vorliegenden Verfahrens sieht die Beendigung der Zufuhr der Druckluft vor Verschließen der Austrags- und Zuführleitung vor.

Gemäß einer bevorzugten erfindungsgemäßen Ausführungsform der vorliegenden Anmeldung wird die Zufuhr der Druckluft vor Verschließen der Austrags und Zuführleitung beendet.
Auf diese Weise wird sichergestellt, dass keine Förderluft in die Zuführleitung eintritt.

Entsprechend einer weiteren, ebenfalls bevorzugten Ausführungsform des erfindungsgemäßen Verfahrens wird
- die Austragsleitung (8) wird verschlossen, wenn der Kolben (11) in seiner Hubbewegung den oberen Totpunkt (OT) erreicht hat;
- danach die Zuführleitung (6) verschlossen;
- nach einer Wartezeit von mindestens 15 ms Druckluft in die Förderkammer (3) gegeben;
- nach einer Wartezeit von mindestens 110 ms der Kolben (11) abwärts unter Zufuhr von Druckluft bewegt;
- die Zufuhr der Druckluft spätestens 20 ms vor Erreichen des unteren Totpunkts (UT) beendet; und
- anschließend die Austragsleitung geschlossen.

Dieses Verfahren stellt einen optimierten Zyklus dar, der für die meisten zu fördernden Pulver allgemein verwendbar ist und der eine gleichmäßige Pulverförderung ohne Auftreten von Schwankungen und ohne Verklebungen oder Verbackungen in der Förderkammer (3) gewährleistet.

In einer weiteren bevorzugten Ausgestaltung der vorliegenden Erfindung wird zwischen dem kontinuierlichen Betrieb ein Reinigungsprogramm gefahren, bei dem Druckluft
- mindestens viermal mit einer Dauer von jeweils mindestens 2,5 s in die Förderkammer (3) gegeben wird; und anschließend
- mindestens einmal mit einer Dauer von mindesten 6 s in die Förderkammer (3) gegeben wird.

Der Druck der zugeführten Druckluft beträgt etwa 6 bar. Bei diesem Pulsen ist die Dauer der Zufuhr im Allgemeinen länger als die Unterbrechung.

Die Vorrichtung und das Verfahren gemäss der Erfindung finden insbesondere in der industriellen Pulverbeschichtung Verwendung. Insbesondere eignet sich die erfindungsgemäße Förderanlage für den Einsatz in der Automobilindustrie für die Lackierung von farblosen Klarlacken und von farbgebenden Basislacken.

Die folgenden Beschreibungen der Abbildungen und Schemata dienen der Erläuterung der Erfindung, ohne diese darauf zu beschränken:

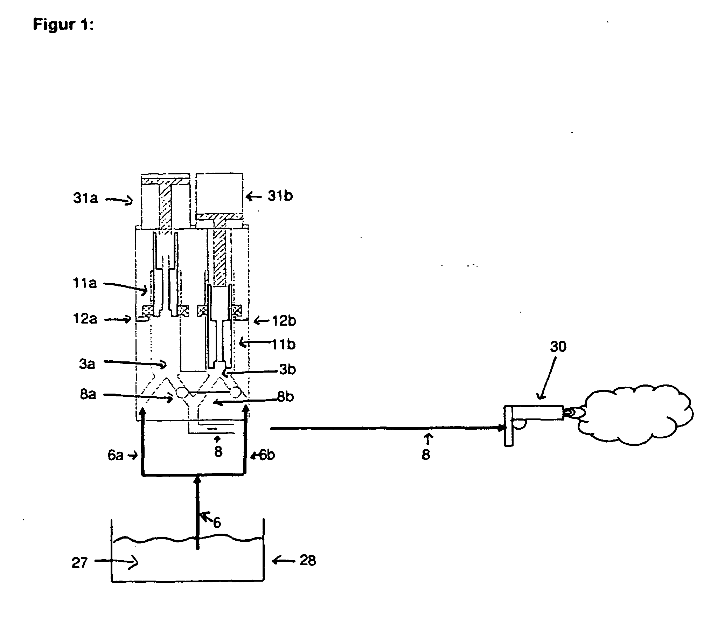

In Figur 1 ist eine erfindungsgemässe Anlage zum Fördern eines Pulvers (27) aus einem Pulverbehälter (28) mit Hilfe einer Förderanlage (29) zu einer Applikationsstelle (30), in der in diesem Beispiel eine Pulverpistole zum Auftragen verwendet wird, dargestellt.
Die Förderanlage (29) besteht in diesem Beispiel aus zwei gleichartig aufgebauten, aber gegensinnig betriebenen Vorrichtungen (1a) und (1b). Selbstverständlich kann die Förderanlage (29) auch mehr als zwei Vorrichtungen (1a), (1b) aufweisen, je nach dem, welche Pulvermengen zur Applikationsstelle (30) gefördert werden müssen und wie pulsationsfrei dies geschehen soll.
Gefördert wird das Pulver (27) über eine gemeinsame Zuführleitung (6a), (6b), die sich in Zuführleitungen (6a) und (6b) aufteilt. Beide Zuführleitungen (6a), (6b) münden in je eine Förderkammer (3a), (3b). In jeder Zuführleitung (6a), (6b) sind Abschlussorgane (7a), (7b) angeordnet.

Aus den Förderkammern (3a), (3b) gelangt das Pulver über Austragsleitungen (8a), (8b) in die gemeinsame Austragsleitungen (8), die zur Applikationsstelle (30) führt. Auch hier sind in den-beiden Austragsleitungen (8a), (8b) Absperrventile (9a), (9b) angeordnet.

Darüber hinaus zeigt die Figur 1 Antriebseinheiten (31a), (31b) mit denen der Kolben über Entkopplungselemente (32a), (32b) verbunden ist. Femer befindet sich der linke Kolben (11a) am oberen Todpunkt. Unter dem oberen Todpunkt (OT) ist der Kanal (12) dargestellt, über den die Druckluft in die Förderkammer (3a) zugeführt wird.

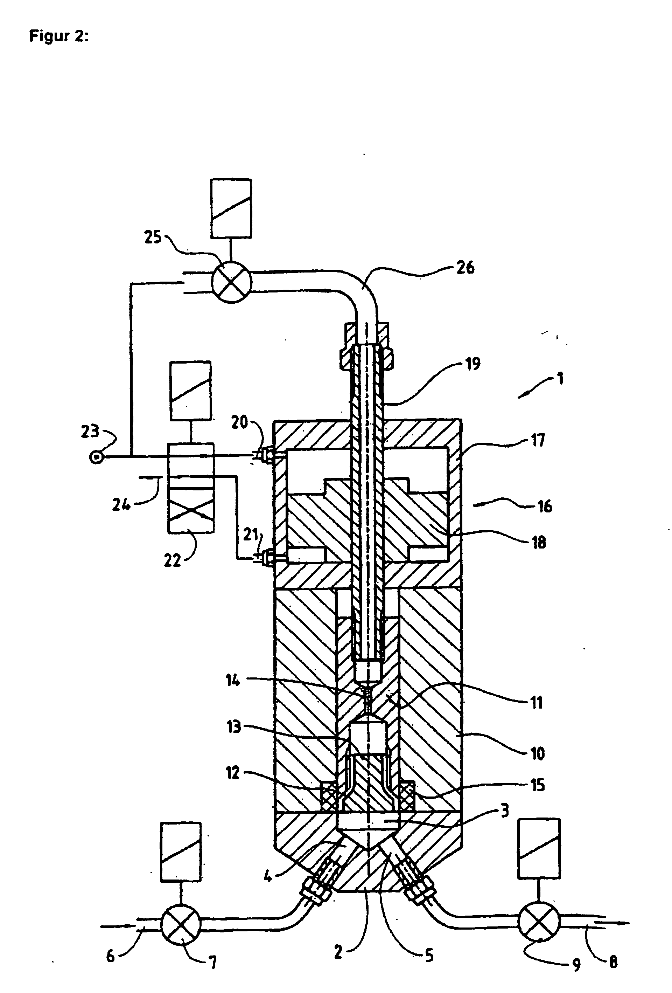

Eine besondere Ausführungsart einer Vorrichtung (1), die ebenfalls in der erfindungsgemäßen Förderanlage verwendet werden kann, ist unter Bezugnahme auf die beiliegende Figur 2 beispielhaft näher erläutert. Die Figur 2 zeigt einen Längsschnitt durch eine schematisch dargestellte Vorrichtung zum Fördern von Pulver.

Die Vorrichtung (1) weist in einem Grundkörper (2) eine Förderkammer (3) auf, in die eine Einlassbohrung (4) und eine Auslassbohrung (5) münden. An die Einlassbohrung (4) ist eine Zuführleitung (6) angeschlossen, die mit einem Abschlussorgan (7) gesteuert verschlossen und freigegeben werden kann. An die Auslassbohrung (5) ist eine Austragsleitung (7) angeschlossen, die mit einem Abschlussorgan (9) gesteuert verschlossen und freigegeben werden kann. Der Grundkörper (2) ist mit einem Führungskörper (10) verbunden, in dem ein Kolben (11) hin- und her verschiebbar angeordnet ist. Der Saugkolben (11) hat eine Längsbohrung (14) und ist an seinem der Förderkammer zugewandten Ende mit einem Verteilstück (13) versehen, das zwischen sich und dem Kolben (11) Kanäle (12) begrenzt, die der Zuführung eines Druckgases zur Förderkammer (3) dienen. Eine Dichtung (15) dichtet den Führungskörper (10) sowohl gegenüber dem Kolben (11) als auch gegenüber dem Grundkörper (2) ab. An seiner von der Förderkammer (3) abgewandten Ende ist der Saugkolben (11) mit einer Antriebsvorrichtung (16) verbunden.

Die Antriebsvorrichtung (16) ist im vorliegenden Beispiel als druckmittelbetriebene Kolben-Zylindereinheit ausgebildet. Sie könnte aber auch als mechanische Antriebseinheit, beispielsweise als Exzenter- oder Kurbelantrieb oder als elektromagnetische Antriebseinheit ausgebildet sein. Der in einem Zylinder (17) durch ein Druckmittel, beispielsweise Luft, bewegbare Kolben (18) der Antriebsvorrichtung (16) hat eine durchgehende, hohle Kolbenstange (19), die an ihrem in der Figur unteren Ende mit einem Kolben (11) verbunden ist. Am anderen Ende der Kolbenstange (19) ist eine Leitung (26) in der Form eines Schlauches angeschlossen, die mit einem Ventil (25) verbunden ist und deren Funktion weiter unten erläutert wird. Eine obere Druckmittelleitung (20) und eine untere Druckmittelleitung (21) dienen zum Beaufschlagen des Kolbens (18) mit einem Druckmittel, beispielsweise Luft, um diesen im Zylinder (17) ab und auf zu bewegen. Die Druckmittelleitungen (20) und (21) sind mit einem Mehrwegeventil (22) verbunden, das seinerseits an eine Druckmittelquelle (23) angeschlossen ist. Je nach der Stellung des Mehrwegeventils (22) ist eine der beiden Druckmittelleitungen (20) oder (21) mit Druck beaufschlagt, während die andere mit einem Auslass (24) verbunden ist.

Im folgenden wird die Funktion der oben beschriebenen Vorrichtung erläutert. Ausgehend von der in der Figur 2 dargestellten Lage wird der Kolben (11) durch die Antriebsvorrichtung (15) von der Förderkammer (3) wegbewegt. Das Abschlussorgan (9) in der Austragsleitung (8) ist zu diesem Zeitpunkt geschlossen. Durch diese Bewegung des Saugkolbens (11) entsteht in der Förderkammer (3) ein Unterdruck. Gleichzeitig wird das Abschlussorgan (7) in der Zuführleitung (6) geöffnet, so dass Pulver aus einem (nicht dargestellten) Pulvervorrat in die Förderkammer (3) strömt. Das Pulver in der Zuführleitung (7) kann bereits in einem Gas oder Gasgemisch dispergiert sein, damit es besonders gut fließfähig ist. In den meisten Fällen wird dieses Gasgemisch Luft sein. Jedoch kann bei heiklen pulverförmigen Stoffen, beispielsweise solchen, die mit Sauerstoff unerwünscht reagieren oder vernetzen, ein anderes Gas oder Gasgemisch, beispielsweise ein Inertgas, verwendet werden. Nachdem genügend Pulver in die Förderkammer (3) geströmt ist, wird das Abschlussorgan (7) in der Zuführleitung (6) geschlossen. Durch Öffnen des Ventils (25) wird Druckgas, das aus der selben Quelle (23) stammen kann wie das zum Betrieb der Antriebsvorrichtung (16) verwendete, dazu gebracht, durch die Leitung (26), die Kolbenstange (19) und die Längsbohrung (14) des Saugkolbens (11) zu strömen. Gleichzeitig wird das Abschlussorgan (9) in der Austragsleitung (8) geöffnet, so dass das in der Förderkammer (3) vorhandene Pulver durch die Austragsleitung (8) ausgestoßen wird. Dieses Ausstoßen des Pulvers mittels Druckgas kann bereits erfolgen, bevor der Kolben (11) in seine Endlage erreicht hat, in der er von der Förderkammer entfernt ist. Damit lässt sich eine genaue Dosierung des durch die Vorrichtung geförderten Pulvers erreichen. Nachdem der Saugkolben (11) wieder in seine in der Figur dargestellten Ausgangslage zurückgekehrt ist, kann ein neuer Förderzyklus beginnen.

Die Figur 3 zeigt eine Schließ- und Öffnungsvorrichtung zum zeitlich unterschiedlichen Öffnen und Verschließen der Zuführleitung (6) und Austragsleitung (8):
Diese Figur 3 stellt einen Schnitt im Bereich der Zuführleitungen (6a), (6b) und Austragsleitung (8a), (8b) dar. Die Schnittebene verläuft senkrecht zu diesen Leitungen. Für eine entsprechende Bewegung der Stäbe (34a), (34b) befindet sich eine entsprechende Bewegungsvorrichtung zwischen den Wandungen (33). Diese Vorrichtung zum Bewegen der beiden Stangen ist in diesem Falle ein Kurzhubzylinder. Mit X und Y werden in dieser Figur die unterschiedlichen Abstände der zu den Wandungen (33) senkrechten Achsen bezeichnet, die durch die Schlauchmitte verlaufen und die Asymmetrie kennzeichnen.
Die Stäbe (34a), (34b) verlaufen nicht parallel zu den Wandungen (33). Durch diese Schrägstellung und die Bewegung des Kurzhubzylinders wird ein zeitlich versetztes Öffnen und Verschließen der Zufuhr- und Austragsleitungen gewährleistet. Durch einen unterschiedlichen Einstellwinkel der Stäbe (34a), (34b) wird eine unterschiedliche Zeitdifferenz vorgewählt.

### Bezugszeichenliste

- 1: Vorrichtung
- 2: Grundkörper
- 3: Förderkammer
- 4: Einlassbohrung
- 5: Auslassbohrung
- 6: Zuführleitung
- 7: Abschlussorgan
- 8: Austragsleitung
- 9: Abschlussorgan
- 10: Führungskörper
- 11: Kolben
- 12: Kanal
- 13: Verteilstück
- 14: Längsbohrung
- 15: Dichtung
- 16: Antriebsvorrichtung
- 17: Zylinder
- 18: Kolben
- 19: Kolbenstange
- 20: obere Druckmittelleitung
- 21: untere Druckmittelleitung
- 22: Mehrwegeventil
- 23: Druckmittelquelle
- 24: Auslass
- 25: Ventil
- 26: Leitung (Schlauch)
- 27: Pulver
- 28: Pulverbehälter
- 29: Förderanlage
- 30: Applikationsstelle
- 31: Antriebseinheit
- 32: Entkopplungseinheit
- 33: Wandung
- 34: Stab

## Patentansprüche

1. Förderanlage mit mehreren Vorrichtungen (1) zum Fördern von Pulver, wobei jede Vorrichtung (1)
• eine Förderkammer (3), in die eine Zuführleitung (6) und eine Austragsleitung (8) für das Pulver münden; und
• Mittel zur Erzeugung eines Unterdrucks in der Förderkammer (3);
aufweist, **dadurch gekennzeichnet, dass** das Mittel zur Erzeugung eines Unterdrucks in der Vorrichtung (1) einen in der Förderkammer beweglichen Kolben (11) aufweist, dass die Förderanlage keine Membran aufweist und dass die Austragsleitungen (8) an eine gemeinsame Verbrauchsstelle geführt werden.

2. Förderanlage nach Anspruch 1, **dadurch gekennzeichnet, dass** sie zusätzlich eine Steuereinheit aufweist, um eine nicht synchrone Hin- und Herbewegung der einzelnen Kolben (11) zu gewährleisten.

3. Förderanlage nach Anspruch 1 oder 2, **dadurch gekennzeichnet, dass** sie zwei Vorrichtungen (1) aufweist.

4. Förderanlage nach einem der vorhergehenden Ansprüche, **dadurch gekennzeichnet, dass** sie zusätzlich einen Kanal (12) zum Zuführen von Druckgas zur Förderkammer (3) aufweist.

5. Förderanlage nach Anspruch 4, **dadurch gekennzeichnet, dass** der Kanal (12) oberhalb des unteren Totpunkts (UT) des Kolbens (11) in die Förderkammer (3) mündet.

6. Förderanlage nach Anspruch 4 oder 5, **dadurch gekennzeichnet, dass** der Kanal (12) in eine umlaufende Nut mit Öffnung zur Förderkammer (3) mündet.

7. Förderanlage nach Anspruch 6, **dadurch gekennzeichnet, dass** die umlaufende Nut eine Weite von 0,05 bis 1 mm aufweist.

8. Förderanlage nach einem der vorhergehenden Ansprüche, **dadurch gekennzeichnet, dass** der untere Teil (3a) der Förderkammer (3), die Zuführleitung (6) und die Austragsleitung (8) aus dem gleichen Material gefertigt sind und insbesondere eine auswechselbare Einheit darstellen.

9. Förderanlage nach einem der vorhergehenden Ansprüche, **dadurch gekennzeichnet, dass** mindestens eine der Austragsleitungen (8) einen inneren Durchmesser von weniger als 8 mm, insbesondere weniger als 6,5 mm, aufweist.

10. Förderanlage nach einem der vorhergehenden Ansprüche, **dadurch gekennzeichnet, dass** mindestens eine der Austragsleitungen (8) eine Länge von mindestens 5 m, insbesondere mindestens 10 m, aufweist.

11. Förderanlage nach einem der vorhergehenden Ansprüche, **dadurch gekennzeichnet, dass** der Kolben (11) über ein Entkoppelungselement (32) mit der Antriebseinheit (31) verbunden ist.

12. Förderanlage nach einem der Ansprüche 1 bis 10, **dadurch gekennzeichnet, dass** der Kolben (11) direkt mit der Antriebseinheit (31) verbunden ist.

13. Förderanlage nach einem der vorhergehenden Ansprüche, **dadurch gekennzeichnet, dass** der innere Durchmesser der Förderkammer im Bereich zwischen dem oberen Totpunkt (OT) und unteren Totpunkt (UT) des Kolbens (11) einen Durchmesser aufweist, der 0,2 bis 0,8 mm größer ist als der äußere Durchmesser des Kolbens (11).

14. Förderanlage nach einem der vorhergehenden Ansprüche, **dadurch gekennzeichnet, dass** das Totvolumen bei geschlossenem Ventil und Kolben am unteren Totpunkt weniger als 1/10, insbesondere weniger als 1/50, des Volumens der gesamten Förderkammer beträgt.

15. Verfahren zum Fördern von Pulver mittels einer Vorrichtung, die eine Förderkammer (3), in die eine Zuführleitung (6) und eine Austragsleitung (8) für das Pulver münden; einen Kolben (11) zum Erzeugen eines Unterdrucks in der Förderkammer (3) und einen Kanal (12) zum Zuführen von Druckgas zur Förderkammer (3) aufweist, wobei der Kolben (11) aus seiner Ausgangslage durch eine Bewegung des Pulver in die Förderkammer saugt, dann Druckgas der Förderkammer (3) zugeführt wird und anschließend der Kolben (11) in seine Ausgangslage zurückkehrt, **dadurch gekennzeichnet, dass**
• die Austragsleitung (8) verschlossen wird, wenn der Kolben (11) in seiner Hubbewegung den oberen Totpunkt (OT) erreicht hat;
• nach einer Wartezeit von mindestens 15 ms Druckluft in die Förderkammer (3) gegeben wird;
• nach einer Wartezeit von mindestens 110 ms der Kolben (11) abwärts unter Zufuhr von Druckluft bewegt wird;
• die Zufuhr der Druckluft spätestens 20 ms vor Erreichen des unteren Totpunkts (UT) beendet wird; und
• anschließend die Austragsleitung geschlossen wird.

16. Verfahren nach Anspruch 15, **dadurch gekennzeichnet, dass** das Verschließen der Zuführleitung (6) und das Öffnen der Austragsleitung (8) nicht gleichzeitig erfolgt.

17. Verfahren nach Anspruch 15 oder 16, **dadurch gekennzeichnet, dass** die Abwärtsgeschwindigkeit des Kolbens nicht konstant ist.

18. Verfahren nach einem der Ansprüche 15 bis 17, **dadurch gekennzeichnet, dass** die Fördermenge an Pulver durch den Hub des Zylinders eingestellt wird.

19. Verfahren nach einem der Ansprüche 15 bis 18, **dadurch gekennzeichnet, dass** die Fördermenge an Pulver durch die Hubfrequenz des Zylinders eingestellt wird.

20. Verfahren nach einem der Ansprüche 15 bis 19, **dadurch gekennzeichnet, dass** die Zufuhr der Druckluft vor Verschließen der Austrags- und Zuführleitung beendet wird.

21. Verfahren nach einem der Ansprüche 15 bis 20, **dadurch gekennzeichnet, dass** zwischen dem kontinuierlichen Betrieb ein Reinigungsprogramm gefahren wird, bei dem Druckluft
• mindestens viermal mit einer Dauer von jeweils mindestens 2,5 s in die Förderkammer (3) gegeben wird; und anschließend
• mindestens einmal mit einer Dauer von mindesten 6 s in die Förderkammer (3) gegeben wird.

## Claims

1. Transport system with several devices (1) to transfer powder, where each device (1) has:
• a transfer chamber (3) into which a supply line (6) and a discharge line (8) for the powder open; and
• means to generate negative pressure in the transfer chamber (3);
**characterized in that** the means to generate negative pressure in the device (1) has a piston (11) which is moveable in the transfer chamber, that the transport system shows no diaphragm and that the discharge lines (8) are taken to a common consumption point.

2. Transport system according to claim 1, **characterized in that** it additionally has a control unit to ensure non-synchronous reciprocal movement of the individual pistons (11).

3. Transport system according to claim 1 or 2, **characterized in that** it has two devices (1).

4. Transport system according to one of the preceding claims, **characterized in that** it additionally has a passage (12) to supply compressed gas to the transfer chamber (3).

5. Transport system according to claim 4, **characterized in that** the passage (12) opens into the transfer chamber (3) above bottom dead center (BDC) of the piston (11).

6. Transport system according to claim 4 or 5, **characterized in that** the passage (12) opens into a circumferential groove with opening to the transfer chamber (3).

7. Transport system according to claim 6, **characterized in that** the circumferential groove has a width of 0.05 to 1 mm.

8. Transport system according to one of the preceding claims, **characterized in that** the lower part (3a) of the transfer chamber (3), the supply line (6) and the discharge line (8) are made from the same material and in particular represent a replaceable unit.

9. Transport system according to one of the preceding claims, **characterized in that** at least one of the discharge lines (8) has an internal diameter of less than 8 mm, specifically less than 6.5 mm.

10. Transport system according to one of the preceding claims, **characterized in that** at least one of the discharge lines (8) has a length of at least 5 meters, specifically of at least 10 meters.

11. Transport system according to one of the preceding claims, **characterized in that** the piston (11) is connected through a decoupling element (32) to the drive unit (31).

12. Transport system according to one of the claims 1 to 10, **characterized in that** the piston (11) is directly connected to the drive unit (31).

13. Transport system according to one of the preceding claims, **characterized in that** the inside diameter of the transfer chamber in the area between top dead center (TDC) and bottom dead center (BDC) of the piston (11) has a diameter 0.2 to 0.8 mm larger than the outside diameter of the piston (11).

14. Transport system according to one of the preceding claims, **characterized in that** the dead volume with the valve closed and the piston at bottom dead center measures less than 1/10th, specifically less than 1/50th, of the volume of the entire transfer chamber.

15. Method of transporting powder by means of a device which has a transfer chamber (3) into which a supply line (6) and a discharge line (8) for the powder open; a piston (11) for generating negative pressure in the transfer chamber (3) and a passage (12) for supplying compressed gas to the transfer chamber (3), where the piston (11) sucks powder into the transfer chamber as the result of movement from its initial position, then compressed gas is brought to the transfer chamber (3) and afterwards the piston (11) returns to its initial position **characterized in that**
• the discharge line (8) is closed when the piston (11) has reached top dead center in its stroke;
• compressed air is introduced into the transfer chamber (3) after a waiting period of at least 15 ms;
• the piston (11) is moved downward through the provision of compressed air after a waiting period of at least 110 ms;
• the provision of compressed air is terminated at the latest 20 ms before reaching bottom dead center; and
• the discharge line is subsequently closed

16. Method according to claim 15, **characterized in that** the closing of the supply line (6) and the opening of the discharge line (8) do not occur simultaneously.

17. Method according to claim 15 or 16, **characterized in that** the downward speed of the piston is not constant.

18. Method according to one of the claims 15 to 17, **characterized in that** the flow rate of the powder is adjusted through the stroke of the cylinder.

19. Method according to one of the claims 15 to 18, **characterized in that** the flow rate of the powder is adjusted through the frequency of the cylinder stroke.

20. Method according to one of the claims 15 to 19, **characterized in that** the provision of compressed air is terminated before closing the discharge and supply line.

21. Method according to one of the claims 15 to 20, **characterized in that** a cleaning program is run between periods of continuous operation in which compressed air
• is introduced into the transfer chamber (3) at least four times for a duration of at least 2.5 secs; and afterwards
• is introduced at least once into the transfer chamber (3) for a duration of at least 6 sees.

## Revendications

1. Installation de transport comportant plusieurs dispositifs pour transporter de la poudre, chaque dispositif (1) présentant
• une chambre de transport (3) dans laquelle aboutissent une conduite d'amenée (6) et une conduite d'évacuation (8) de la poudre; et
• un moyen de production d'une pression négative dans la chambre de transport (3);
**caractérisée en ce que** le moyen de production d'une pression négative dans le dispositif (1) présente un piston (11) mobile dans la chambre de transport, que l'installation de transport ne présente pas de membrane et que les conduites d'évacuation (8) mènent à un point de consommation commun.

2. Installation de transport selon la revendication 1, **caractérisée en ce qu'**elle présente en plus une unité de commande pour garantir un mouvement de va-et-vient non synchrone de chaque piston (11).

3. Installation de transport selon l'une des revendications 1 et 2, **caractérisée en ce qu'**elle présente deux dispositifs (1).

4. Installation de transport selon l'une des revendications précédentes, **caractérisée en ce qu'**elle présente en plus un canal (12) pour amener le gaz sous haute pression vers la chambre de transport (3).

5. Installation de transport selon la revendication 4, **caractérisée en ce que** le canal (12) aboutit dans la chambre de transport (3) au-dessus du point mort bas (PMB) du piston (11).

6. Installation de transport selon l'une des revendications 4 et 5, caractérsiée en ce que le canal (12) aboutit dans une rainure périphérique ayant une ouverture vers la chambre de transport (3).

7. Installation de transport selon la revendication 6, **caractérisée en ce que** la rainure périphérique a une largeur comprise entre 0,05 et 1 mm.

8. Installation de transport selon l'une des revendications précédentes, **caractérisée en ce que** la partie inférieure (3a) de la chambre de transport (3), la conduite d'amenée (6) et la conduite d'évacuation (8) sont construits dans le même matériau et constituent en particulier une unité remplaçable.

9. Installation de transport selon l'une des revendications précédentes, **caractérisée en ce qu'**au moins une des conduites d'évacuation (8) présente un diamètre intérieur de moins de 8 mm, en particulier de moins de 6,5 mm.

10. Installation de transport selon l'une des revendications précédentes, **caractérisée en ce qu'**au moins une des conduites d'évacuation (8) présente une longueur d'au moins 5 m, en particulier d'au moins 10 m.

11. Installation de transport selon l'une des revendications précédentes, **caractérisée en ce** le piston (11) est relié à l'unité de commande (31) par un élément de découplage (32).

12. Installation de transport selon l'une des revendications 1 à 10, **caractérisée en ce que** le piston (11) est directement relié à l'unité de commande (31).

13. Installation de transport selon l'une des revendications précédentes, **caractérisée en ce** le diamètre intérieur de la chambre de transport présente entre le point mort haut (PMH) et le point mort bas (PMB) du piston (11) un diamètre supérieur de 0,2 à 0,8 mm au diamètre extérieur du piston (11).

14. Installation de transport selon l'une des revendications précédentes, **caractérisée en ce** le volume neutre avec la soupape fermée et le piston au point mort bas est inférieur de 1/10, en particulier de 1/50 au volume de toute la chambre de transport.

15. Procédé de transport de poudre au moyen d'un dispositif présentant une chambre de transport (3) dans laquelle aboutissent une conduite d'amenée (6) et une conduite d'évacuation (8) de la poudre, un piston (11) pour produire une pression négative dans la chambre de transport (3) et un canal (12) pour amener le gaz sous haute pression dans la chambre de transport; le piston (11) aspirant à partir de sa position de repos la poudre dans la chambre de transport par un mouvement, le gaz sous haute pression étant amené ensuite dans la chambre de transport (3) et le piston (11) revenant enfin dans sa position de repos; **caractérisé en ce que**
• la conduite d'évacuation (8) est refermée dès que le piston (11) a atteint le point mort haut (PMH) dans son mouvement d'élévation ;
• de l'air comprimé est ajouté dans la chambre de transport (3) après un délai d'attente d'au moins 15 ms ;
• le piston (11) descend pendant l'ajout d'air comprimé après un délai d'attente d'au moins 110 ms ;
• l'ajout de l'air comprimé se termine au plus tard 20 ms avant que le point mort bas (PMB) soit atteint; et
• la conduite d'évacuation est ensuite refermée.

16. Procédé selon la revendication 15, **caractérisé en ce que** la fermeture de la conduite d'amenée (6) et l'ouverture de la conduite d'évacuation (8) ne se font pas en même temps.

17. Procédé selon l'une des revendications 15 et 16, **caractérisé en ce que** la vitesse de descente du piston n'est pas constante.

18. Procédé selon l'une des revendications 15 à 17, **caractérisé en ce que** la quantité de poudre transportée est réglée par l'élévation du cylindre.

19. Procédé selon l'une des revendications 15 à 18, **caractérisé en ce que** la quantité de poudre transportée est réglée par la fréquence d'élévation du cylindre.

20. Procédé selon l'une des revendications 15 à 19, **caractérisé en ce que** l'ajout d'air comprimé est terminé avant la fermeture de la conduite d'évacuation et de la conduite d'amenée.

21. Procédé selon l'une des revendications 15 à 20, **caractérisé en ce qu'**entre le régime continuel un programme de nettoyage est mis en oeuvre dans lequel l'air comprimé
• est ajouté au moins quatre fois dans la chambre de transport (3) pendant respectivement au moins 2,5 s; et ensuite
• est ajouté au moins une fois dans la chambre de transport (3) pendant au moins 6 s.
